# EUROPEAN PATENT APPLICATION

(11) **EP 4 425 213 A1**
(43) Date of publication of application: **04.09.2024**
(21) Application number: 23159736.0
(22) Date of filing: 02.03.2023
(51) Int. Cl.: G01S 13/76, G01S 13/87, G01S 13/88, G01S 7/02, G01S 13/02, G01S 13/72

(54) **COMMUNICATION DEVICES AND OPERATING METHODS**

(71) Applicant: NXP B.V., 5656 AG Eindhoven (NL)
(72) Inventor: Tertinek, Stefan, 5656 AG Eindhoven (NL)
(74) Representative: Krott, Michel

(57) **Abstract**

In accordance with a first aspect of the present disclosure, a communication device is provided, comprising: an ultra-wideband communication unit configured to operate in a first radar mode and in a second radar mode; a distance determination unit configured to determine a distance between the communication device and an external device; a controller configured to switch the ultra-wideband communication unit from the first radar mode into the second radar mode in dependence on the distance determined by the distance determination unit. In accordance with further aspects, another communication device is provided, as well as methods for operating the communication device and other communication device, and a corresponding computer program.

## Description

### TECHNICAL FIELD

The present disclosure relates to communication devices. Furthermore, the present disclosure relates to corresponding methods of operating a communication device, and to a computer program for carrying out said methods.

### BACKGROUND

Ultra-wideband (UWB) communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e. for determining the distance between communicating devices. Therefore, UWB technology may be used to advantage in various applications, such as automotive applications. In addition, UWB technology may be used to carry out radar operations, e.g. for detecting objects or persons within a predefined area.

### SUMMARY

In accordance with a first aspect of the present disclosure, a communication device is provided, comprising: an ultra-wideband communication unit configured to operate in a first radar mode and in a second radar mode; a distance determination unit configured to determine a distance between the communication device and an external device; a controller configured to switch the ultra-wideband communication unit from the first radar mode into the second radar mode in dependence on the distance determined by the distance determination unit.

In one or more embodiments, the distance determination unit is configured to determine said distance using ultra-wideband communication in a ranging mode, Wi-Fi communication or Bluetooth low energy (BLE) communication.

In one or more embodiments, the controller is configured to switch the ultra-wideband communication unit from the first radar mode into the second radar mode if the distance determined by the distance determination unit falls below a predefined threshold.

In one or more embodiments, the first radar mode is a low-power mode and the second radar mode is a high-power mode.

In one or more embodiments, the first radar mode is a low range resolution mode and the second radar mode is a high range resolution mode.

In one or more embodiments, the first radar mode involves operating the ultra-wideband communication unit at a first channel frequency and wherein the second radar mode involves operating the ultra-wideband communication unit at a second channel frequency.

In one or more embodiments, the first radar mode involves using a first radar code, in particular a code generated at a low pulse repetition frequency (LPRF), and wherein the second radar mode involves using a second radar code, in particular a code generated at a high pulse repetition frequency (HPRF).

In one or more embodiments, the controller is further configured to switch the ultra-wideband communication unit from the first radar mode into the second radar mode in dependence on location information, wherein said location information is indicative of the location of the external device.

In one or more embodiments, said location information has been provided by the distance determination unit and/or by one or more external localization devices.

In one or more embodiments, a lighting device comprises a communication device of the kind set forth.

In one or more embodiments, a speaker comprises a communication device of the kind set forth.

In accordance with a second aspect of the present disclosure, a method of operating a communication device is conceived, the communication device comprising an ultra-wideband communication unit, a distance determination unit and a controller, and the method comprising: determining, by the distance determination unit, a distance between the communication device and an external device; switching, by the controller, the ultra-wideband communication unit from a first radar mode into a second radar mode in dependence on the distance determined by the distance determination unit.

In accordance with a third aspect of the present disclosure, a communication device is provided, comprising: an ultra-wideband communication unit configured to operate in a first radar mode, a second radar mode and a ranging mode; a controller configured to: switch the ultra-wideband communication unit from the first radar mode into the ranging mode such that the ultra-wideband communication unit determines a distance between the communication device and an external device; switch the ultra-wideband communication unit from the ranging mode back to the first radar mode or into the second radar mode in dependence on the distance determined by the ultra-wideband communication unit.

In accordance with a fourth aspect of the present disclosure, a method of operating a communication device is conceived, the communication device comprising an ultra-wideband communication unit and a controller, and the method comprising: switching, by the controller, the ultra-wideband communication unit from a first radar mode into a ranging mode such that the ultra-wideband communication unit determines a distance between the communication device and an external device; switching, by the controller, the ultra-wideband communication unit from the ranging mode back to the first radar mode or into a second radar mode in dependence on the distance determined by the ultra-wideband communication unit.

In accordance with a fifth aspect of the present disclosure, a computer program is provided, comprising executable instructions which, when executed by a communication device, cause said communication device to carry out a method of the kind set forth.

### DESCRIPTION OF DRAWINGS

Embodiments will be described in more detail with reference to the appended drawings.
Fig. 1 shows an example of a system for tracking a person.
Fig. 2 shows an illustrative embodiment of a communication device.
Fig. 3 shows an illustrative embodiment of a method of operating a communication device.
Fig. 4 shows another illustrative embodiment of a communication device.
Fig. 5 shows another illustrative embodiment of a method of operating a communication device.
Fig. 6 shows a further illustrative embodiment of a method of operating a communication device.
Fig. 7 shows an illustrative embodiment of a light control system.
Fig. 8 shows an illustrative embodiment of a speaker control system.

### DESCRIPTION OF EMBODIMENTS

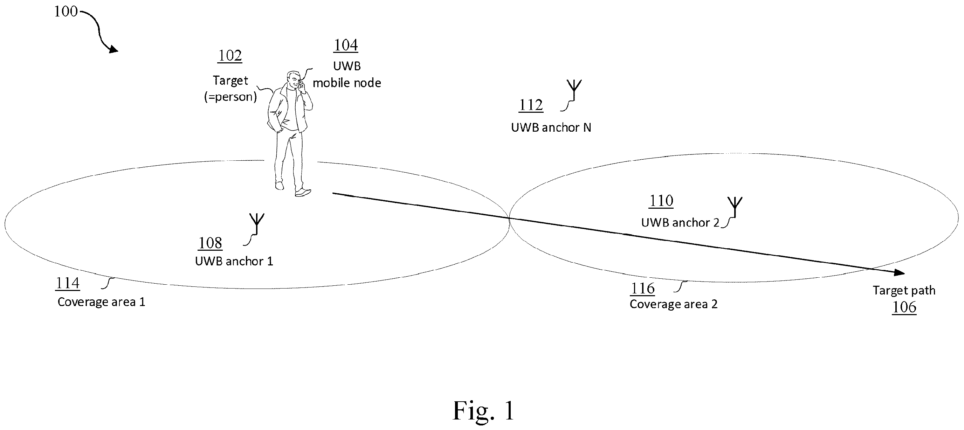

**Fig. 1** shows an example of a system 100 for tracking a person. The system 100 comprises a plurality of UWB anchors 108, 110, 112 configured to operate in a radar mode and to detect a target 102 (i.e., a person). The target 102 moves along a target path 106. Each of the plurality of UWB anchors 108, 110, 112 comprises a radar capable UWB device, which is connected to one or more antennas. When configured in the radar mode, each UWB anchor 108, 110, 112 has a certain coverage area 114, 116, which is defined as the maximum range or area over which a moving target can be detected and tracked. The network is typically designed such that the coverage area 114, 116 of the individual UWB anchors 108, 110, 112 join or overlap. Furthermore, the target 102 carries a UWB mobile node 104 (e.g., a smartphone) which is capable of wirelessly communicating with the UWB anchors 108, 110, 112, for example via UWB, Wi-Fi, or Bluetooth low energy (BLE), thereby allowing the UWB anchors 108, 110, 112 to determine the distance to the UWB mobile node 104.

UWB devices are typically used for applications requiring ranging (i.e., localization) and communication because they are able to precisely determine the range and robustly transfer data over a channel. However, those devices are now also being extended to radar applications, as the same hardware can be used for both ranging and radar. When multiple UWB devices operate in radar mode and are deployed over a common area, they can form a powerful UWB radar network, capable of jointly sensing a moving target, such as a person, for applications including entertainment, elderly monitoring (e.g., fall detection, vital sign monitoring), or smart home (e.g., light control). However, UWB anchors have no knowledge of the presence of a moving target within their coverage area. Therefore, they should continuously sense the coverage area for a target. This significantly increases the overall power consumption of the network.

Now discussed are communication devices and corresponding operating methods, which facilitate reducing the overall power consumption of a system or network for tracking a target. The presently disclosed communication devices may be used to advantage in various applications, such as light control and speaker control applications.

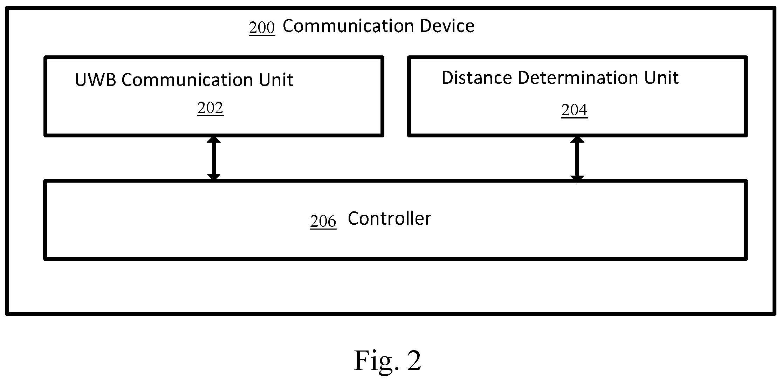

**Fig. 2** shows an illustrative embodiment of a communication device 200. The communication device 200 comprises a UWB communication unit 202, a distance determination unit 204 and a controller 206. The UWB communication unit 202 is configured to operate in a first radar mode and in a second radar mode. The distance determination unit 204 is configured to determine a distance between the communication device 200 and another communication device (not shown), which is external to the communication device 200. Furthermore, the communication device 200 comprises a controller 206 which is configured to switch the UWB communication unit 202 from the first radar mode into the second radar mode in dependence on the distance determined by the distance determination unit 204. By switching the UWB communication unit 202 between different radar modes in dependence on the distance between the communication device 200 and an external device, a higher degree of flexibility may achieved. This, in turn, facilitates reducing the power consumption of a system in which the communication device 200 is used, because it is no longer necessary that the UWB communication unit 202 operates in a fixed radar mode, for example to continuously sense the coverage area for a target. Instead, a radar mode suitable for continuously sensing a coverage area may be enabled in dependence on the distance between the communication device 200 and an external device carried by the target. Thus, the communication device 200 represents a solution to the problem of how to facilitate reducing the overall power consumption of a system or network for tracking a target.

In particular, the communication device 200 may optimize its radar operation in different scenarios, for example when it operates as a stand-alone radar device or as a networked radar device. For instance, the communication device 200 may trade off detection performance for power consumption. The UWB communication unit 202 is configured to operate in a plurality of different radar modes. When operated for radar the UWB communication unit 202 may transmit UWB packets or frames, receive reflections from the environment and determine the presence of a target in said reflections. Furthermore, the distance determination unit 204 may communicate with an external device by exchanging data packets or frames with said external device. The packets may be used to determine a distance from the communication device 200 to the external device. The distance determination unit 204 may implement a protocol of an existing wireless technology such as BLE or Wi-Fi, or it may be implemented as another UWB communication unit which is configured for ranging operations. The controller 206 may control the operation of both the UWB communication unit 202 and the distance determination unit 204, and switch the UWB communication unit 202 between the plurality of radar modes.

UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. In addition to ranging operations of this kind, UWB devices may also carry out radar operations. Thus, UWB devices may operate in a ranging mode, and in one or more different radar modes.

In a ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). It is noted that an angle-of-arrival (AoA) mode of operation is similar to a ranging mode, but it involves at least two antennas on one device. In particular, in an AoA mode of operation, two phase values associated with at least two CIRs are calculated on one device. Then, a phase difference of arrival (PDoA) is calculated based on the two phase values, and an AoA is calculated based on the PDoA. An AoA mode of operation may facilitate a more accurate determination of the position of an object, and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation.

In a radar mode of operation, frames are transmitted by at least one device and those frames are received by the same device and/or by one or more other devices. Then, the CIRs are estimated on the device or devices receiving the frames, and the range and/or velocity and/or AoA are calculated based on the estimated CIRs. A radar mode of operation may be used to advantage to detect (i.e., sense) the presence of objects or human beings. However, a radar mode of operation may also be used to estimate a distance, although with a lower accuracy than the ranging mode of operation will typically achieve. The skilled person will appreciate that the given examples are non-limiting examples of how the different modes of operation can be implemented. In other words, the modes may be implemented differently, depending on the requirements imposed by the application, for example.

In one or more embodiments, the distance determination unit is configured to determine said distance using UWB communication, Wi-Fi communication or BLE communication. In this way, the determination of the distance is facilitated. Furthermore, in one or more embodiments, the controller is configured the switch the UWB communication unit from the first radar mode into the second radar mode if the distance determined by the distance determination unit falls below a predefined threshold. In this way, a suitable radar mode may be enabled if an external device carried by a target is present within a predefined perimeter around the communication device.

In one or more embodiments, the first radar mode is a low-power mode and the second radar mode is a high-power mode. Thus, the UWB communication unit may be switched into a high-power mode when this is appropriate, for example to track the movement of a target that is present within a predefined perimeter around the communication device. In contrast, if no target is present within said perimeter, the UWB communication unit may operate in a low-power mode to save power. Furthermore, in one or more embodiments, the first radar mode is a low range resolution mode and the second radar mode is a high range resolution mode. Thus, the UWB communication unit may be switched into a high range resolution mode when this is appropriate, for example to increase the accuracy of tracking the movement of a target that is present within a predefined perimeter around the communication device. In contrast, if no target is present within said perimeter, the UWB communication unit may operate in a low range resolution mode, which typically consumes less power than a high range resolution mode.

In one or more embodiments, the first radar mode involves operating the UWB communication unit at a first channel frequency and wherein the second radar mode involves operating the UWB communication unit at a second channel frequency. In this way, interference with a co-located radar device may be mitigated by changing the channel frequency if the communication device should start tracking a target. Furthermore, in one or more embodiments, the first radar mode involves using a first radar code and the second radar mode involves using a second radar code. In this way, interference with a co-located radar device may be mitigated by changing the code used to generate the UWB radar pulses if the communication device should start tracking a target.

In one or more embodiments, the controller is further configured to switch the UWB communication unit from the first radar mode into the second radar mode in dependence on location information, wherein said location information is indicative of the location of the external device. Thus, in addition to the distance, a more precise indication of the location or position of the external device may be used as a control parameter to switch the UWB communication unit into a different radar mode. This, in turn, further increases the degree of flexibility and facilitates achieving a higher power efficiency. In a practical implementation, said location information has been provided by the distance determination unit and/or by one or more external localization devices.

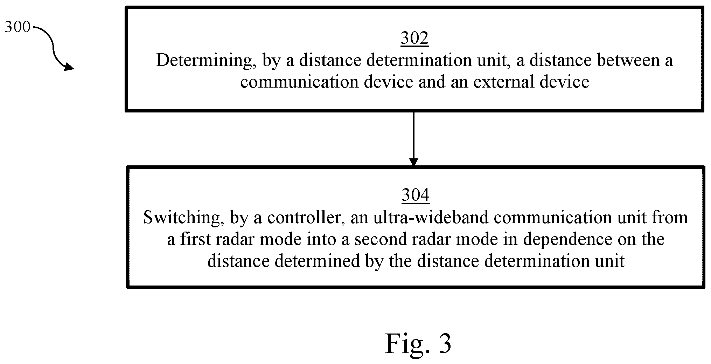

**Fig. 3** shows an illustrative embodiment of a method 300 of operating a communication device. The communication device comprises a UWB communication unit, a distance determination unit and a controller, as shown in Fig. 2. The method 300 comprises the following steps. At 302, the distance determination unit determines a distance between the communication device and an external device. Furthermore, at 304, the controller switches the UWB communication unit from a first radar mode into a second radar mode in dependence on the distance determined by the distance determination unit. As explained with reference to the corresponding communication device shown in Fig. 2, the method 300 facilitates reducing the power consumption of a system in which the communication device is used.

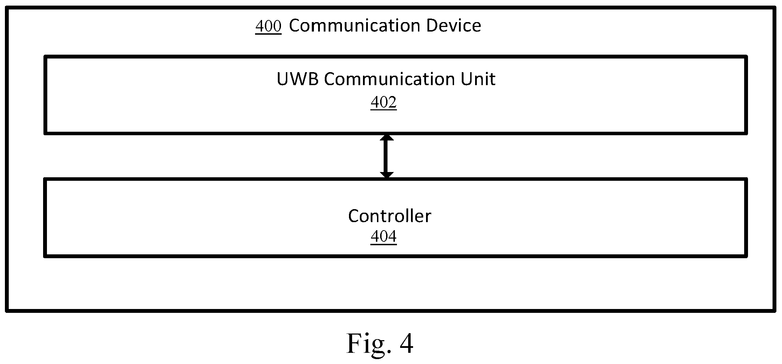

**Fig. 4** shows another illustrative embodiment of a communication device 400. The communication device 400 comprises a UWB communication unit 402 and a controller 404. The UWB communication unit 402 is configured to operate in a first radar mode, a second radar mode and a ranging mode. The controller 404 is configured to switch the UWB communication unit 402 from the first radar mode into the ranging mode such that the UWB communication unit 402 determines a distance between the communication device 400 and another communication device (not shown), which is external to the communication device 400. Furthermore, the controller 404 is configured to switch the UWB communication unit 402 from the ranging mode back to the first radar mode or into the second radar mode in dependence on the distance determined by the UWB communication unit 402. By switching the UWB communication unit 402 between different radar modes in dependence on the distance between the communication device 400 and an external device, a higher degree of flexibility may achieved. This, in turn, facilitates reducing the power consumption of a system in which the communication device 400 is used, because it is no longer necessary that the UWB communication unit 402 operates in a fixed radar mode, for example to continuously sense the coverage area for a target. Instead, a radar mode suitable for continuously sensing a coverage area may be enabled in dependence on the distance between the communication device 400 and an external device carried by the target. In this embodiment, the distance is determined by the UWB communication unit 402 itself. This may achieved by periodically enabling the ranging mode of said UWB communication unit 402, in order to determine said distance. In this way, a separate component for determining the distance is not needed, which facilitates saving silicon area. Thus, the communication device 400 represents an alternative solution to the problem of how to facilitate reducing the overall power consumption of a system or network for tracking a target.

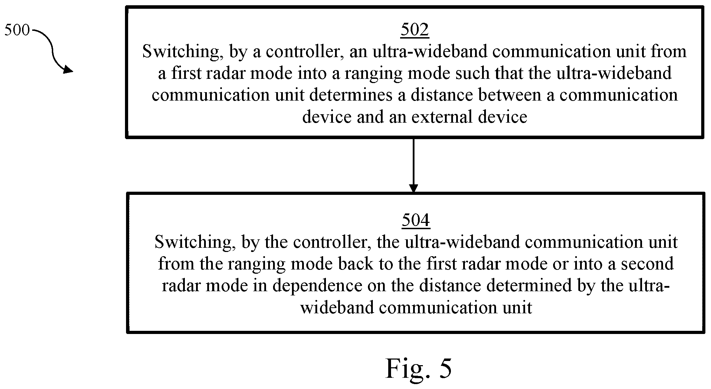

**Fig. 5** shows another illustrative embodiment of a method 500 of operating a communication device. The communication device comprises a UWB communication unit and a controller, as shown in Fig. 4. The method 500 comprises the following steps. At 502, the controller switches the UWB communication unit from a first radar mode into a ranging mode such that the UWB communication unit determines a distance between the communication device and an external device. Furthermore, at 504, the controller switches the UWB communication unit from the ranging mode back to the first radar mode or into a second radar mode in dependence on the distance determined by the UWB communication unit. As explained with reference to the corresponding communication device shown in Fig. 4, the method 500 facilitates reducing the power consumption of a system in which the communication device is used.

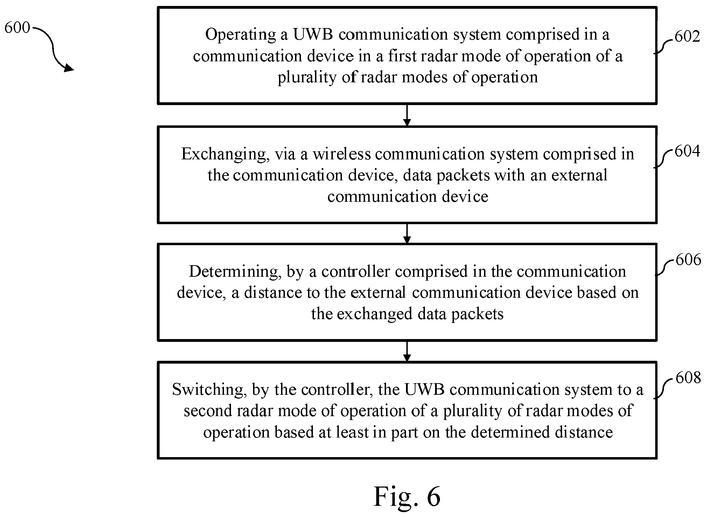

**Fig. 6** shows a further illustrative embodiment of a method 600 of operating a communication device. In particular, Fig. 6 shows a possible, more detailed implementation of steps for operating the communication device shown in Fig. 2. In the first step 602 the UWB communication system (i.e., the UWB communication unit) is operated in a first radar mode of a plurality of radar modes. For example, a first radar mode may be a low-power radar mode, consuming only as much power as needed to detect a moving target within a coverage area of the communication device. In the second step 604 the wireless communication system (i.e., the distance determination unit) establishes communication with an external device, exchanging data packets so as to determine a distance between the devices. In one example, the wireless communication system may be another UWB communication unit operating as a ranging system and performing double-sided two-way ranging with the external device, exchanging data packets as specified by the IEEE 802.15.4a standard. In another example, the wireless communication system may implement a Wi-Fi protocol, exchanging data packets as specified by the IEEE 802.11 standard.

In the third step 606 a controller processes the data exchanged between the wireless communication system and the external device and determines a distance. In the case of another UWB communication unit, the distance may be determined based on the time-of-flight (ToF) computed from time stamps obtained from channel impulse responses on both devices. The time-stamps may be exchanged as part of the data packets. In a similar manner, the distance may be determined from ToF obtained from exchanging Wi-Fi packets. In the case of a BLE-based communication system, the distance may be obtained from a received signal strength indication (RSSI), or from phase-based ranging information as defined in the Bluetooth high-accuracy distance measurement (HADM) core specification workgroup, although the ranging accuracy will be lower compared to when a UWB communication unit is used. In addition, the controller may receive, as part of the data packets, distance or location information from other external devices, such as UWB anchors in a radar network (as shown in Fig. 1). It is noted that the controller may be integrated into the UWB communication system or the wireless communication system, but it may also be separate from those systems. For example, the wireless communication system may be implemented as a dedicated microcontroller.

In the fourth step 608 the controller switches the UWB communication system to a second radar mode of the plurality of radar modes based at least in part on the distance determined in the third step 606. For example, a second radar mode may be a high-power mode (as opposed to the low-power mode of the first step 602), wherein the radar consumes more power while also providing a better detection performance, for example to accurately track the target. In summary, by switching the UWB radar between different modes depending on a distance, the overall performance and power consumption of the UWB radar (network) can be optimized. Various UWB radar modes of operation are summarized in Table 1.

**Table 1**

| **First mode** | **Second mode** | **Usage** / **Use case** |
|---|---|---|
| Low-power mode | High-power mode | Optimize power consumption (e.g. change the transmit power) |
| Low range resolution | High range resolution | Use higher resolution when target is closer for more accurate tracking |
| First channel frequency | Second channel frequency | Mitigate interference with co-located radar device by changing the channel |
| First radar code | Second radar code | Mitigate interference with co-located radar device by changing the code used to generate the UWB radar pulses |

It is noted that a typical use case of switching channel frequencies depending on the distance may be as follows. It may be assumed that there are N+1 channel frequencies fₙ, where n=0,1,...,N, all of which are different: fₙ ~= fₘ, when m~=n. Furthermore, the frequency f₀ is a common frequency that might be used by all anchors, while the frequencies f₁,...,f_{N} are specific to the N anchors. In particular, the channel frequencies may be preassigned to the anchors. For example, anchor 1 may use frequency fi, anchor 2 may use frequency f₂ and so on. In one example, the channel frequencies may be stored in an internal memory of the communication device 200. In another example, if all of the UWB anchors are connected to some infrastructure (e.g., a central controller), the central controller may assign the frequencies during an initialization phase of the anchors. The UWB anchors (i.e., the radar network) may use the channel frequencies as follows. In a first radar mode, anchor n (n=1,2,...,N) uses frequency fₙ, where the coverage area of anchor n can actually overlap with those of other anchors. As the frequencies are different, there will be no interference. This first radar mode is used by an anchor when there is no target (low power mode). In a second radar mode, anchor n uses the common frequency f₀, but now the coverage area is as shown in Fig. 1, i.e., without overlapping with those of other anchors. The second radar mode is used by an anchor when a target is close to an anchor (as determined by the distance determination unit), allowing the anchor to track the target at frequency f₀. As the coverage areas do not overlap, there will be no interference when adjacent anchors use the same frequency f₀ (e.g., when targets are close to adjacent anchors).

Furthermore, it is noted that an example of a first radar code is a code generated at a low pulse repetition frequency (LPRF) and an example of the second radar code is a code generated at a high pulse repetition frequency (HPRF). More specifically, LPRF produces a code that results in pulses being spaced far apart (i.e., the first radar code), whereas HPRF produces a code that results in pulses being spaced close together (i.e., the second radar code). Typically LPRF implies that the receiver is blind to targets at close distances, but is able to receive more easily reflections from targets at larger distance. By contrast, HPRF implies that the receiver cannot easily receive reflections from targets at large distances, but can do so for targets at close distances. Hence switching from the first radar mode to the second radar mode involves switching between LPRF and HPRF depending on the distance. Similar to the different channel frequencies, the different codes used for LPRF and HPRF can be preassigned to the anchors, or assigned during an initialization phase.

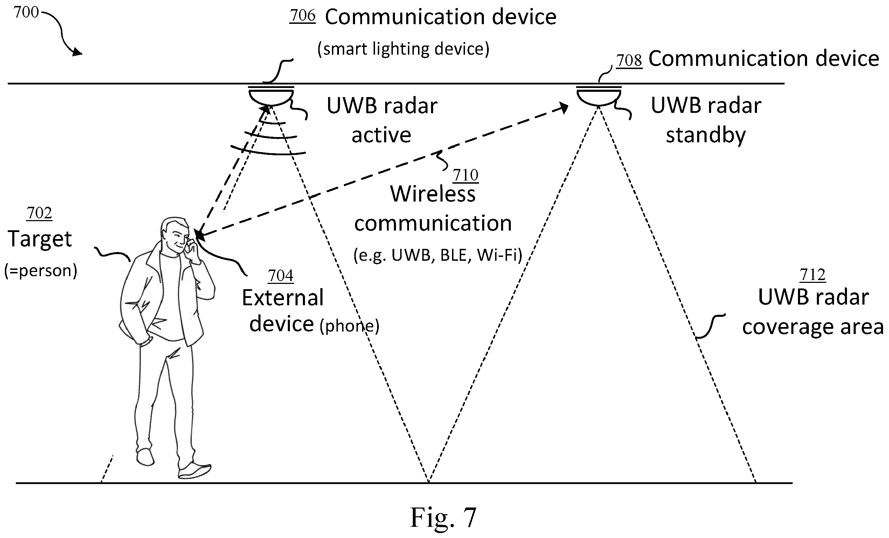

Fig. 7 shows an illustrative embodiment of a light control system 700. The light control system 700 represents a use case of the presently disclosed communication devices, for example in a smart home. A target 702 walks into a smart home which comprises an intelligent lighting infrastructure including multiple smart lighting devices 706, 708, in which a UWB communication unit and a distance determination unit are integrated. Thus, the lighting devices 706, 708 are examples of a communication device as shown in Fig. 2. Furthermore, the infrastructure comprises a central processing node (not shown) which could potentially be in a cloud. The infrastructure controls the ambient light (brightness, color etc.) depending on the target's preference and the target's movement and location within the room. The target 702 carries a phone 704 which, when entering the room, wirelessly connects with the infrastructure, for example, via a UWB ranging mode or via BLE or Wi-Fi. Initially, the lighting devices 706, 708 operate the UWB communication unit in a first radar mode, e.g. a standby mode with low power consumption. Once the infrastructure has localized the target 702 by exchanging data packets between the lighting devices 706, 708 and the phone 704, the infrastructure can switch only the closest lighting device to a second radar mode, e.g. an active mode suitable for tracking the target 702.

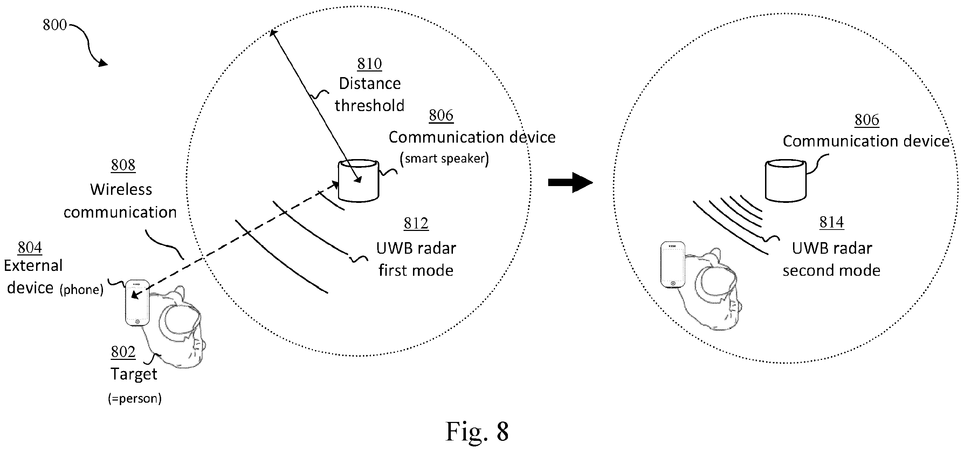

**Fig. 8** shows an illustrative embodiment of a speaker control system 800. The speaker control system 800 represents a use case of the presently disclosed communication devices. A target 802 carrying a phone 804 interacts with a smart speaker 806, for example by pointing the phone 804 at the speaker 806 or by performing hand gestures to control the speaker 806. Similar to the phone the speaker 806 has integrated wireless connectivity (UWB, BLE, Wi-Fi), but it also integrates a UWB communication unit which it operates in a first radar mode 812. Thus, the speaker 806 is an example of a communication device as shown in Fig. 2. The phone 804 wirelessly communicates 808 with the speaker 806, allowing the speaker 806 to determine a distance to the phone 804 (and consequently to the target 802). Based on the determined distance the speaker 806 can switch its UWB communication unit into a second radar mode 814, for example if the determined distance falls below a predefined distance threshold 810. As shown in Fig. 8, the first UWB radar mode 812 may be a mode with a low frame repetition rate, sufficient to determine the presence of a moving target. As the target 802 comes within a range of the speaker 806 determined by the distance threshold 810, the speaker 806 switches its UWB communication unit into the second UWB radar mode 814 having a high frame repetition rate, which may be needed to accurately track the target 802 or to detect a gesture performed by the target 802.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: system for tracking a person
- 102: target
- 104: UWB mobile node
- 106: target path
- 108: UWB anchor 1
- 110: UWB anchor 2
- 112: UWB anchor N
- 114: coverage area 1
- 116: coverage area 2
- 200: communication device
- 202: UWB communication unit
- 204: distance determination unit
- 206: controller
- 300: method of operating a communication device
- 302: determining, by a distance determination unit, a distance between a communication device and an external device
- 304: switching, by a controller, an ultra-wideband communication unit from a first radar mode into a second radar mode in dependence on the distance determined by the distance determination unit
- 400: communication device
- 402: UWB communication unit
- 404: controller
- 500: method of operating a communication device
- 502: switching, by a controller, an ultra-wideband communication unit from a first radar mode into a ranging mode such that the ultra-wideband communication unit determines a distance between a communication device and an external device
- 504: switching, by the controller, the ultra-wideband communication unit from the ranging mode back to the first radar mode or into a second radar mode in dependence on the distance determined by the ultra-wideband communication unit
- 600: method of operating a communication device
- 602: operating a UWB communication system comprised in a communication device in a first radar mode of operation of a plurality of radar modes of operation
- 604: exchanging, via a wireless communication system comprised in the communication device, data packets with an external communication device
- 606: determining, by a controller comprised in the communication device, a distance to the external communication device based on the exchanged packets
- 608: switching, by the controller, the UWB communication system to a second radar mode of operation of the plurality of radar modes of operation based at least in part on the determined distance
- 700: light control system
- 702: target
- 704: external device
- 706: communication device
- 708: communication device
- 710: wireless communication
- 712: UWB radar coverage area
- 800: speaker control system
- 802: target
- 804: external device
- 806: communication device
- 808: wireless communication
- 810: distance threshold
- 812: first UWB radar mode
- 814: second UWB radar mode

## Claims

1. A communication device, comprising:
an ultra-wideband communication unit configured to operate in a first radar mode and in a second radar mode;
a distance determination unit configured to determine a distance between the communication device and an external device;
a controller configured to switch the ultra-wideband communication unit from the first radar mode into the second radar mode in dependence on the distance determined by the distance determination unit.

2. The communication device of claim 1, wherein the distance determination unit is configured to determine said distance using ultra-wideband communication in a ranging mode, Wi-Fi communication or Bluetooth low energy, BLE, communication.

3. The communication device of claim 1 or 2, wherein the controller is configured to switch the ultra-wideband communication unit from the first radar mode into the second radar mode if the distance determined by the distance determination unit falls below a predefined threshold.

4. The communication device of any preceding claim, wherein the first radar mode is a low-power mode and the second radar mode is a high-power mode.

5. The communication device of any preceding claim, wherein the first radar mode is a low range resolution mode and the second radar mode is a high range resolution mode.

6. The communication device of any preceding claim, wherein the first radar mode involves operating the ultra-wideband communication unit at a first channel frequency and wherein the second radar mode involves operating the ultra-wideband communication unit at a second channel frequency.

7. The communication device of any preceding claim, wherein the first radar mode involves using a first radar code, in particular a code generated at a low pulse repetition frequency, LPRF, and wherein the second radar mode involves using a second radar code, in particular a code generated at a high pulse repetition frequency, HPRF.

8. The communication device of any preceding claim, wherein the controller is further configured to switch the ultra-wideband communication unit from the first radar mode into the second radar mode in dependence on location information, wherein said location information is indicative of the location of the external device.

9. The communication device of claim 8, wherein said location information has been provided by the distance determination unit and/or by one or more external localization devices.

10. A lighting device comprising the communication device of any preceding claim.

11. A speaker comprising the communication device of any preceding claim.

12. A method of operating a communication device, the communication device comprising an ultra-wideband communication unit, a distance determination unit and a controller, and the method comprising:
determining, by the distance determination unit, a distance between the communication device and an external device;
switching, by the controller, the ultra-wideband communication unit from a first radar mode into a second radar mode in dependence on the distance determined by the distance determination unit.

13. A communication device, comprising:
an ultra-wideband communication unit configured to operate in a first radar mode, a second radar mode and a ranging mode;
a controller configured to:
switch the ultra-wideband communication unit from the first radar mode into the ranging mode such that the ultra-wideband communication unit determines a distance between the communication device and an external device;
switch the ultra-wideband communication unit from the ranging mode back to the first radar mode or into the second radar mode in dependence on the distance determined by the ultra-wideband communication unit.

14. A method of operating a communication device, the communication device comprising an ultra-wideband communication unit and a controller, and the method comprising:
switching, by the controller, the ultra-wideband communication unit from a first radar mode into a ranging mode such that the ultra-wideband communication unit determines a distance between the communication device and an external device;
switching, by the controller, the ultra-wideband communication unit from the ranging mode back to the first radar mode or into a second radar mode in dependence on the distance determined by the ultra-wideband communication unit.

15. A computer program comprising executable instructions which, when executed by a communication device, cause said communication device to carry out the method of claim 12 or 14.

## Amended claims

### Amended claims in accordance with Rule 137(2) EPC.

1. A communication device (200), comprising:
an ultra-wideband communication unit (202) configured to operate in a first radar mode and in a second radar mode, wherein, when operating in said first radar mode or second radar mode, the ultra-wideband communication unit (202) transmits ultra-wideband packets or frames, receives reflections from the environment and determines the presence of a target in said reflections;
a distance determination unit (204) configured to determine a distance between the communication device (200) and an external device;
a controller (206) configured to switch the ultra-wideband communication unit (202) from the first radar mode into the second radar mode in dependence on the distance determined by the distance determination unit (204).

2. The communication device (200) of claim 1, wherein the distance determination unit (204) is configured to determine said distance using ultra-wideband communication in a ranging mode, Wi-Fi communication or Bluetooth low energy, BLE, communication.

3. The communication device (200) of claim 1 or 2, wherein the controller (206) is configured to switch the ultra-wideband communication unit (202) from the first radar mode into the second radar mode if the distance determined by the distance determination unit (204) falls below a predefined threshold.

4. The communication device (200) of any preceding claim, wherein the first radar mode is a low-power mode and the second radar mode is a high-power mode.

5. The communication device (200) of any preceding claim, wherein the first radar mode is a low range resolution mode and the second radar mode is a high range resolution mode.

6. The communication device (200) of any preceding claim, wherein the first radar mode involves operating the ultra-wideband communication unit (202) at a first channel frequency and wherein the second radar mode involves operating the ultra-wideband communication unit (202) at a second channel frequency.

7. The communication device (200) of any preceding claim, wherein the first radar mode involves using a first radar code, in particular a code generated at a low pulse repetition frequency, LPRF, and wherein the second radar mode involves using a second radar code, in particular a code generated at a high pulse repetition frequency, HPRF.

8. The communication device (200) of any preceding claim, wherein the controller (206) is further configured to switch the ultra-wideband communication unit (202) from the first radar mode into the second radar mode in dependence on location information, wherein said location information is indicative of the location of the external device.

9. The communication device (200) of claim 8, wherein said location information has been provided by the distance determination unit (204) and/or by one or more external localization devices.

10. A lighting device comprising the communication device (200) of any preceding claim.

11. A speaker comprising the communication device (200) of any preceding claim.

12. A method (300) of operating a communication device, the communication device comprising an ultra-wideband communication unit, a distance determination unit and a controller, and the method (300) comprising:
determining (302), by the distance determination unit, a distance between the communication device and an external device;
switching (304), by the controller, the ultra-wideband communication unit from a first radar mode into a second radar mode in dependence on the distance determined by the distance determination unit, wherein, when operating in said first radar mode or second radar mode, the ultra-wideband communication unit transmits ultra-wideband packets or frames, receives reflections from the environment and determines the presence of a target in said reflections.

13. A communication device (400), comprising:
an ultra-wideband communication unit (402) configured to operate in a first radar mode, a second radar mode and a ranging mode, wherein, when operating in said first radar mode or second radar mode, the ultra-wideband communication unit (402) transmits ultra-wideband packets or frames, receives reflections from the environment and determines the presence of a target in said reflections;
a controller (404) configured to:
switch the ultra-wideband communication unit (402) from the first radar mode into the ranging mode such that the ultra-wideband communication unit (402) determines a distance between the communication device (400) and an external device;
switch the ultra-wideband communication unit (402) from the ranging mode back to the first radar mode or into the second radar mode in dependence on the distance determined by the ultra-wideband communication unit (402).

14. A method (500) of operating a communication device, the communication device comprising an ultra-wideband communication unit and a controller, and the method (500) comprising:
switching (502), by the controller, the ultra-wideband communication unit from a first radar mode into a ranging mode such that the ultra-wideband communication unit determines a distance between the communication device and an external device;
switching (504), by the controller, the ultra-wideband communication unit from the ranging mode back to the first radar mode or into a second radar mode in dependence on the distance determined by the ultra-wideband communication unit, wherein, when operating in said first radar mode or second radar mode, the ultra-wideband communication unit transmits ultra-wideband packets or frames, receives reflections from the environment and determines the presence of a target in said reflections.

15. A computer program comprising executable instructions which, when executed by a communication device, cause said communication device to carry out the method of claim 12 or 14.
